## Europäisches Patentamt
## European Patent Office
## Office européen des brevets

(19)

(11) Numéro de publication: **0 190 082**
**B1**

(12) # FASCICULE DE BREVET EUROPEEN

(45) Date de publication du fascicule du brevet:
**29.11.89**

(21) Numéro de dépôt: **86420004.3**

(22) Date de dépôt: **06.01.86**

(51) Int. Cl.⁴: **C 25 C 3/14,** B 65 G 53/22, B 65 G 53/66

(54) **Dispositif de distribution à débit régulé d'une matière pulvérulente fluidisable.**

(30) Priorité: **08.01.85 FR 8500469**

(43) Date de publication de la demande:
**06.08.86 Bulletin 86/32**

(45) Mention de la délivrance du brevet:
**29.11.89 Bulletin 89/48**

(84) Etats contractants désignés:
**DE GB IT SE**

(56) Documents cités:
**WO-A-84/01560**
**FR-A- 2 391 136**

(73) Titulaire: **ALUMINIUM PECHINEY, 23, rue Balzac, F-75008 Paris Cédex 08 (FR)**

(72) Inventeur: **Hanrot, Jean-Pascal, 7, La Clairnaude Pont de l'Arc, F-13100 Aix-En-Provence (FR)**
Inventeur: **Voipeliere, Jacky, Allée des Genêts Quartier Cassin Mimet, F-13120 Gardanne (FR)**

(74) Mandataire: **Pascaud, Claude et al, PECHINEY 28, rue de Bonnel, F-69433 Lyon Cédex 3 (FR)**

## Description

### 1. Domaine technique de l'invention

La présente invention concerne un dispositif de distribution à débit régulé d'une matière pulvérulente fluidisable.

Il est connu de transporter des matériaux pulvérulents à l'état fluidisé, d'un emplacement de stockage à un autre ou d'un emplacement de stockage à un ou plusieurs points d'utilisation. On doit rappeler que l'expression «matériaux fluidisables» désigne tous les matériaux se présentant sous une forme pulvérulente et dont la granulométrie et la cohésion sont telles que la vitesse de passage de l'air insufflé provoque à vitesse faible, la décohésion des particules entre elles et la réduction des forces de frottement interne, de telle sorte que la suspension ainsi formée se comporte très sensiblement comme un fluide homogène. De tels matériaux sont, par exemple, l'alumine destinée à l'électrolyse ignée, les ciments et plâtres, la chaux vive ou éteinte, les cendres volantes, le fluorure de calcium, les charges d'apport pour les caoutchouc et plastique, les fécules, les catalyseurs, le charbon pulvérisé, le sulfate de sodium, les phosphates, polyphosphates, pyrophosphates, les poudres métalliques, les matériaux plastiques sous la forme de poudre, les produits alimentaires tels que le lait en poudre, les farines, etc...

### 2. Etat de la technique anterieure

Depuis fort longtemps, on s'est préoccupé des moyens de régler, et même de réguler, le débit d'un matériau fluidisé (US 2 667 448). De nombreuses solutions mécaniques (telles que vannes ou clapets) ont été proposées, mais elles sont inutilisables lorsque le matériau transporté est abrasif, ce qui est le cas d'une bonne partie de ceux qui ont été énumérés ci-dessus, et tout particulièrement de l'alumine destinée à la production d'aluminium: il faut alors renoncer aux dispositifs mécaniques sujets à usure, et faire appel aux propriétés spécifiques des matériaux pulvérulents.

Dans le brevet français FR 1 152 269 (PECHINEY) (= US 2 919 159), on décrit un procédé de transport pneumatique de matière fluidisée, selon lequel la conduite de transport pneumatique est alimentée avec de la poudre venant directement du bas d'une colonne qui contient de la poudre fluidisée en permanence à l'air libre.

Dans le brevet français FR 2 236 758 (PECHINEY) (= US 3 964 793), on a décrit un procédé de régulation du débit pondéral de matières pulvérulentes dans une installation de transport pneumatique continu par injection de gaz avec un équilibrage par une colonne fluidisée d'alimentation, dans lequel, pour un débit pondéral de gaz donné, on mesure la pression du gaz injecté et on agit sur la quantité de matières pulvérulentes introduites dans la colonne fluidisée, dont la tête est à la pression atmosphérique, afin de maintenir la pression de gaz injecté à une valeur déterminée.

Le brevet français FR 2 391 136 (PECHINEY) (= US 4 279 549) décrit un procédé de régulation automatique de transport pneumatique de matière pulvérulente comportant une colonne d'alimentation au pied de laquelle se forme un talus d'aboulement, une enceinte d'expédition munie d'une paroi poreuse de fluidisation, de conduites de fluidisation et d'alimentation de gaz surpressé équipé d'un injecteur, de conduites destinées au transport, selon ce procédé, pour provoquer une diminution de l'angle du talus d'éboulement, on fluidise le matériau et on choisit pour un débit de matière voulu dans la canalisation d'expédition, une pression de consigne Pf au-dessous de la paroi poreuse. Il s'établit ainsi au-dessus de ladite paroi une pression Pc = Pf dans l'enceinte d'expédition de sorte qu'à tout accroissement de Pc au-delà de Pf correspond une diminution de la circulation gazeuse à la pression Pf à travers la paroi poreuse, tandis qu'à toute réduction du Pc en deçà de Pf correspond une augmentation de ladite circulation gazeuse. Ce procédé a l'avantage d'assurer une autorégulation du débit de matière pulvérulente autour de la valeur choisie selon la pression Pf ce qui exclut tout risque de bourrage de la colonne d'expédition et fixe le débit de la matière.

Le document Wo-A-84/01560 correspondant aux demandes de brevet EP-A-0 122 925 et FR-A-2 534 891 décrit un dispositif pour le convoyage horizontal de matière pulvérulente, notamment d'alumine, depuis une zone de stockage jusqu'à au moins une zone à alimenter, par fluidisation de ladite matière pulvérulente au moyen d'un dispositif comportant un caisson en deux parties, une partie supérieure reliée d'une part à une de ses extrémités au moyen de stockage par une colonne d'alimentation et d'autre part à son extrémité opposée à une colonne d'équilibrage et de dégazage, et une partie inférieure séparée de la partie supérieure par une paroi poreuse de fluidisation, ladite partie inférieure étant reliée à une arrivée de gaz de fluidisation à pression régulée. Ce dispositif qui ne comporte aucune réduction de section dans la partie horizontale supérieure du caisson contenant la matière pulvérulente, est particulièrement adapté pour le transport et la distribution de matière pulvérulente entre des points relativement distants dans la mesure où l'on ne recherche pas un dosage précis de la matière distribuée.

### 3. Exposé du problème technique

A l'heure actuelle, un certain nombre d'utilisateurs, en particulier les exploitants de cellules d'électrolyse Hall-Héroult pour la production d'aluminium, exigent de ces dispositifs de transport pneumatique fluidisé une durée de vie et une fiabilité encore accrues, et une plus grande précision de la régulation du débit, aussi bien pour l'alimentation des cuves d'électrolyse que pour celle des dispositifs de captage, par voie sèche, des effluents fluorés émis par ces cuves en mettant à profit les capacités d'adsorption de l'alumine vis à vis des produits fluorés. Enfin, il importe que les consommations d'air comprimé pour la fluidisation et le transport fluidisé soient minimisés, et que l'arrêt et la remise en marche du dispositif s'effectuent de façon simple, sûre, et rapide. Ces exigences restent valables pour tous les types de transports fluidisés et pas seulement pour l'alumine destinée à l'électrolyse.

4. Objet de l'invention

La présente invention a pour but de surmonter les différents inconvénients que comportent encore les dispositifs existants, et de satisfaire les exigences des utilisateurs en matière de fiabilité, de précision et de commodité d'emploi.

L'objet de l'invention est un dispositif de distribution à débit régulé d'une matière pulvérulente fluidisable, comportant un moyen de stockage et un moyen de fluidisation de ladite matière pulvérulente et un moyen d'évacuation de la matière pulvérulente fluidisée, dispositif comportant un caisson en deux parties, une partie supérieure reliée d'une part à une de ses extrémités au moyen de stockage par une colonne d'alimentation et d'autre part à son extrémité opposée à une colonne d'équilibrage et de dégazage, et une partie inférieure séparée de la partie supérieure par une paroi poreuse de fluidisation, ladite partie inférieure étant reliée à une arrivée de gaz de fluidisation à pression régulée, caractérisé en ce que la partie supérieure du caisson comporte sur la face verticale d'extrémité un orifice de sortie de la matière pulvérulente fluidisée, situé immédiatement au-dessus du niveau de la paroi poreuse de fluidisation et muni d'un ajutage de sortie dont le diamètre interne est supérieur à celui dudit orifice de section telle qu'il existe une relation biunivoque entre le débit de matière pulvérulente fluidisée sortant par l'orifice et la pression de fluidisation. En effet, le débit de matière pulvérulente fluidisée, et c'est là le point caractéristique de l'invention, est réglé, uniquement en jouant sur la pression de l'air de fluidisation et il est, pour une pression de consigne et une section de l'orifice déterminées, autorégulé.

Dans tout ce qui suit, on parlera d'«air de fluidisation» pour simplifier l'exposé, mais il est évident que tout autre fluide gazeux pourrait convenir, et que, par exemple, dans le cas de la fluidisation de substances très réactives ou présentant des risques d'explosion (telles que farines, poudres d'aluminium ou de magnésium), le fluide gazeux peut être choisi parmi les gaz inertes ou peu réactifs: argon, azote, dioxyde de carbone, etc...

Description des figures

- Les figures 1, 1a, 2 et 3 présentent en coupe verticale schématique et la figure 4 en coupe horizontale selon AA, le dispositif objet de l'invention.
- Les figures 1, 1a et 2 correspondent au dispositif à l'arrêt, et la figure 3 au dispositif en fonctionnement.

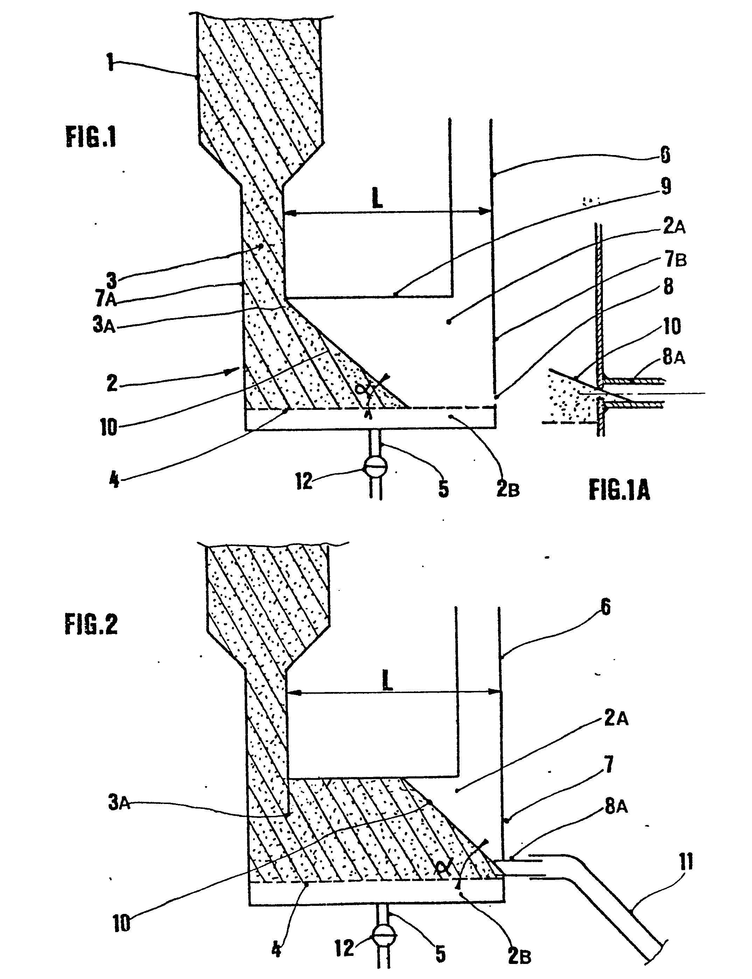

- La figure 1A est une coupe agrandie de l'orifice de sortie muni d'un ajutage.

La capacité de stockage (1) est reliée au caisson (2) par une colonne d'alimentation (3).

Le caisson (2) qui est généralement de forme parallélépipédique, avec sa plus grande dimension dans le sens horizontal, comporte:

- à sa partie inférieure (2B) une paroi poreuse de fluidisation (4) et une arrivée (5) d'air de fluidisation à pression constante, et réglable, de façon connue, à une valeur de consigne prédéterminée,
- à sa partie supérieure (2A) du côté d'une de ses extrémités (7B), une colonne (6) d'équilibrage et de dégazage, et du côté de l'autre extrémité (7A) la colonne d'alimentation (3),
- sur la face d'extrémité (7B) correspondant à la colonne d'équilibrage et sensiblement au niveau de la paroi poreuse (4), un orifice (8) de sortie de la matière pulvérulente fluidisée situé immédiatement au-dessus de la paroi poreuse de fluidisation, et formant diaphragme et qui peut être muni d'un ajutage (8A), le plus souvent tubulaire et de diamètre interne supérieur au diamètre de l'orifice (8) et sur lequel peut se connecter une canalisation d'évacuation de la matière pulvérulente. L'extrémité inférieure de la colonne d'équilibrage (6) affleure à la paroi supérieure (9) du caisson.

Au repos, la matière pulvérulente stockée dans le réservoir (1) descend dans le caisson (2) en formant un talus naturel d'éboulement (10) – fig. 1– dont l'angle α par rapport à la grille de fluidisation dépend de la nature et de l'état physique de la matière pulvérulente. Le pied du talus doit arriver au maximum au niveau de l'orifice (8), sinon, il y aurait, à l'arrêt, écoulement naturel continu de la matière pulvérulente, même en l'absence de toute fluidisation. Pour cela, on fixe, à la construction, la distance L entre l'arête inférieure (3A) de la colonne (3) et la face verticale opposée (7B) du caisson, en fonction de la matière pulvérulente, dont l'angle de talus α peut être mesuré. Un autre moyen de réglage pourrait consister à régler le niveau de pénétration de la colonne d'alimentation (3) dans la partie supérieure du caisson, du fait que le talus commence à se former à partir du rebord inférieur de la colonne d'alimentation.

Comme on l'a indiqué précédemment, l'orifice (8) peut être muni d'un ajutage de sortie (8A) formant diaphragme, dont la partie extérieure peut être raccordée à la tuyauterie d'évacuation (11) de la matière pulvérulente fluidisée. Cet ajutage (8A) constitue aussi une sécurité à l'arrêt du dispositif; l'écoulement accidentel, au repos, de la matière pulvérulente non fluidisée, se trouvant alors bloqué en (10) dans l'ajutage (8A). On peut ainsi arrêter le fonctionnement du système sans être obligé de le vider complètement (figure 2).

Le fonctionnement du dispositif peut être décrit de la façon suivante: Le caisson étant rempli d'une matière pulvérulente (dans la configuration de la fig. 1 ou de la fig. 2), et l'orifice (8) étant fermé, on envoie l'air de fluidisation, par la canalisation (5) et le moyen de réglage (12), au travers de la paroi poreuse (4): on constate que la matière pulvérulente passe tout d'abord dans un état «fluent», par suite d'un début de décohésion des grains dû à l'interposition d'air dans son sein, et qu'elle remplit rapidement la partie supérieur (2A) du caisson et le bas de la colonne d'équilibrage (6).

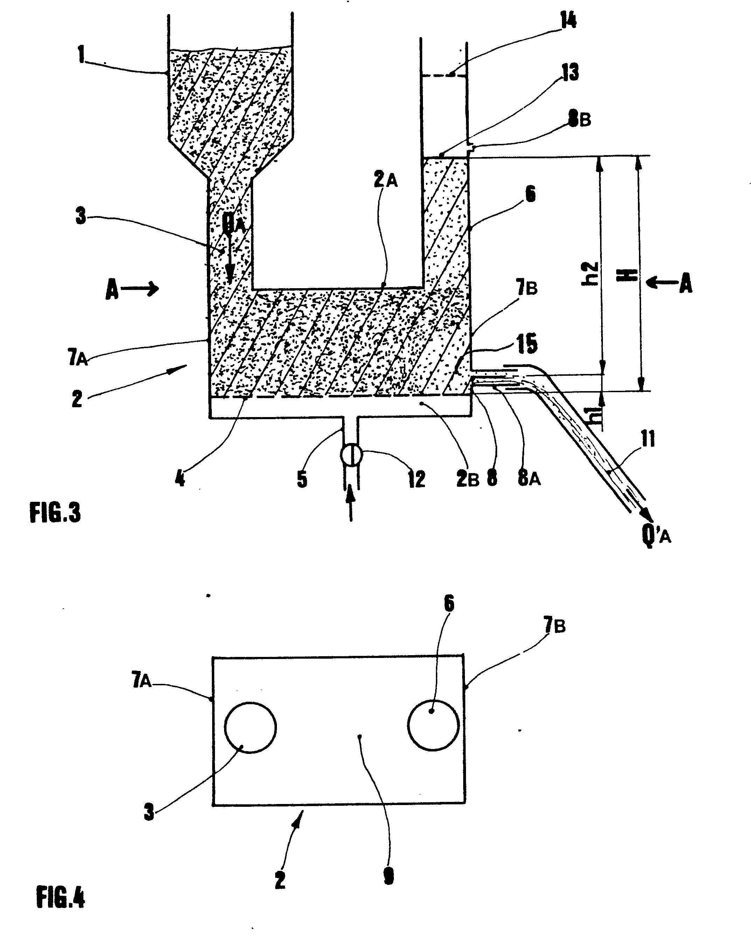

En augmentant encore la pression de l'air, on constate que le niveau de la matière pulvérulente monte peu à peu dans la colonne d'équilibrage (6) jusqu'à une certaine hauteur H (fig. 3), qui dépend de la pression (Pf) de l'air de fluidisation et de la densité moyenne (d) de la matière pulvérulente dans la colonne d'équilibrage (6) (H=Pf/d).

Dans le caisson proprement dit, compte tenu du fait que l'air est emprisonné dans la matière pulvérulente et ne peut s'en échapper (sauf à la partie supérieure (14) de la colonne (6), la matière pulvérulente se trouve sous un état pseudo-fluidisé, ou encore de «fluidisation potentielle», état particulier que nous avons décrit dans notre brevet antérieur FR-A-2 534 891, et qui correspond à un niveau particulier de pression d'air dans les interstices des particules de matière pulvérulente sans qu'il y ait véritablement décohésion et mouvement des particules, comme c'est le cas dans un milieu véritablement fluidisé, ni circulation de l'air.

Si, maintenant, on ouvre l'orifice (8), la détente de l'air peut se produire au niveau de cet orifice, et dans la zone (15) située immédiatement en arrière de cet orifice, où il s'établit un état fluidisé vrai qui permet l'écoulement fluide de la matière pulvérulente, par l'orifice (8) et l'ajutage (8A).

La matière pulvérulente qui s'écoule par l'orifice (8) est renouvelée par éboulements successifs, en cascade, de la matière en état de fluidisation potentielle située en arrière, et de proche en proche jusqu'au pied de la colonne d'alimentation (3). En effet, chaque «éboulement» libère un espace suffisant pour que la matière pulvérulente passe, localement, de l'état de fluidisation potentielle à l'état de fluidisation vraie, ce qui assure, pour une large gamme de débits, un apport d'alumine égal au débit de sortie, sans aucun à-coups dans ce débit.

L'équilibre dynamique des autres éléments du système s'établit de la façon suivante:

a) la pression de fluidisation Pf est équilibrée par la contre-pression de la colonne d'équilibrage $P_2$ plus les pertes de charge au travers de la paroi poreuse de fluidisation: $P_1$

$$Pf = P_2 + P_1$$

La pression $P_2$ est elle-même égale à $(h_1 - h_2)$ $d_1$, $d_1$ étant la densité moyenne de la phase partiellement fluidisée (égale par exemple à environ 0,75 à 0,95 pour de l'alumine «sandy coarse» pour électrolyse, $h_1$ étant la hauteur entre la paroi de fluidisation (4) et l'axe de l'orifice (8), et $h_2$ la hauteur entre l'axe de l'orifice (8) et la partie supérieure (14) de la colonne de matériau pulvérulent fluidisé.

Dans l'hypothèse où la pression $P_e$ qui règne au-dessus de la colonne d'équilibrage et de dégazage (6) est différente de la pression atmosphérique, l'équilibre s'établit pour une nouvelle hauteur de colonne $H' = H - Pe/d$, Pe étant exprimé par rapport à la pression atmosphérique prise comme référence de pression = 0.

b) Le débit d'air de fluidisation Qf est égal à:

$$Of = Q1 + Q2 + Qp$$

Q1 étant le débit d'air entraîné, par l'orifice de sortie (8) avec la phase fluidisée, et qui correspond à la détente de la matière pulvérulente en état de fluidisation potentielle.

Q2 étant le débit d'air de dégazage dans la colonne d'équilibrage

Qp étant le (faible) débit de pertes diverses qui doit être négligeable dans un appareil bien conçu.

c) Le débit de matière pulvérulente $Q'_A$, à la sortie de l'orifice (8) est égal au débit $Q_A$ d'alumine en provenance de la capacité de stockage (2), si l'on admet que les pertes par envolement dans la colonne d'équilibrage sont nulles, ce qui doit être le cas.

Le système étant ainsi en équilibre, et c'est là l'élément essentiel de l'invention, on constate que pour une matière pulvérulente donnée et pour un ajutage (8) donné, le débit de matière pulvérulente $Q'_A$ est en relation biunivoque avec Pf, cette relation étant sensiblement linéaire dans certaines limites qui seront précisées un peu plus loin.

Il en résulte que le débit de matière pulvérulente d'un tel dispositif peut être fixé et régulé en jouant uniquement sur la pression de l'air de fluidisation, sans qu'une autre source d'air soit nécessaire, comme c'était le cas dans les procédés antérieurs (et, en particulier dans FR 2 391 136 (= US 4 279 549) qui nécessitaient une arrivée d'air de fluidisation et une arrivée distincte d'air de transport pneumatique.

Le diamètre de l'orifice (8), qui joue le rôle de disphragme, détermine à la fois le débit $Q'_A$ d'alumine – pour une pression Pf donnée – et la forme de la courbe représentant la fonction $Q'_A = f (Pf)$.

Dans la mesure où une poudre fluidisée telle que l'alumine peut être assimilée à un fluide vrai, on constate une certaine corrélation avec la loi qui donne le débit volumétrique Q d'un orifice au travers d'une paroi verticale:

$$Q = K.S. \sqrt{2\,gh.}$$

Q étant le débit (en m³/s)
S la surface de l'orifice (en m²)
g l'accélération de la pesanteur en gal
h la hauteur de charge de l'orifice mesurée du niveau amont du fluide jusqu'au centre de l'orifice (en mètres)
K étant un coefficient, qui dépend notamment de la géométrie de l'orifice de sortie; la valeur de K peut varier d'environ 0,6 à 1.

Si l'on trace les courbes du débit pondéral d'alumine en fonction de la pression de fluidisation, en prenant, pour paramètre, la section de l'orifice (8), on constate que ces courbes comportent, pour certaines valeurs du paramètre «diamètre de l'orifice» une partie sensiblement linéaire plus ou moins longue. On peut donc, dans la zone de débit prévue pour le dispositif, objet de l'invention, optimiser le diamètre de l'orifice (8) de façon que le débit pondéral prévu corresponde sensiblement au milieu de la partie linéaire.

Si la pression Pf reste bien constante, le débit pondéral de matière pulvérulente reste remarquablement constant.

Si l'on veut disposer très rapidement, et momentanément, d'un fort excès de débit (par exemple: apport massif d'alumine dans une cuve d'électrolyse qui menace de s'emballer), on peut prévoir un orifice supplémentaire (8b) situé à la partie supérieure de la colonne d'équilibrage, et au-dessus du niveau normal H de la colonne de matière pulvérulente. Une augmentation de Pf aura alors un double effet: augmentation normale du débit en sortie de l'orifice (8), et création d'un débit supplémentaire par surverse d'alumine fluidisée en sortie de l'orifice 8b, du fait que la colonne (6) atteint maintenant un niveau tel que (14).

Il serait également possible de disposer l'orifice supplémentaire (8b) au-dessous du niveau normal (H); il assurerait alors un débit d'appoint constant, mais inférieur au débit de l'orifice principal (8), ce qui pourrait, dans quelques cas, présenter un certain intérêt.

5. Exemple d'application

On a construit un distributeur doseur d'alumine fluidisée, destinée à capter les effluents fluorés émis par une série de cuves pour la production d'aluminium par électrolyse ignée. Les gaz émis par les cuves sont aspirés et rassemblés dans un collecteur général où l'on introduit de l'alumine qui, du fait de ses propriétés adsorbantes, capte les dérivés fluorés; cette alumine est ensuite réinjectée dans les cuves d'électrolyse.

L'ajutage de sortie (8A) est relié par un tube (11), transparent en polymétracrylate de méthyle, incliné d'environ 45° vers le bas, à la base du collecteur de gaz de cuves. La colonne d'alimentation (3) est branchée en dérivation sur le circuit qui amène l'alumine sur les dispositifs habituels d'alimentation des cuves d'électrolyse (aéroglissière par exemple). La colonne d'équilibrage (6) débouche à la partie supérieure du collecteur de gaz de cuves. Comme ce collecteur, soumis à une aspiration, est en dépression, la pression Pe qui règne au-dessus de la colonne d'équilibrage (6) est inférieure à la pression atmosphérique (environ −100 mm CE).

L'ajutage (8A) a un diamètre de 20 mm, ce qui correspond à la valeur optimale pour un débit moyen pondéral d'alumine $Q_A = 1,8$ tonne/heure.

Pour le débit nominal, la pression de fluidisation Pf est régulée à 400 mm d'eau ($\simeq$ 3920 Pa). La surface totale de la paroi poreuse de fluidisation étant de 4,5 dm², cela correspond à un débit total d'air Qf = 11 litres par minute.

La perte de charge $P_1$ au travers de la paroi poreuse de fluidisation étant de 20 mm CE, on a donc $P_2$ (contre-pression de la colonne d'équilibrage) = 400-20, soit 380 mm CE (= 3720 Pa).

Ce système d'alimentation régulée en alumine fluidisée alimente, depuis plusieurs mois, les captages d'effluents fluorés sur une série de 120 cuves d'électrolyse, et fonctionne avec une parfaite régularité. Sa consommation en air de fluidisation est inférieure à 1 m³/heure et par m² sous 500 mm de CE (4900 Pa).

Il s'applique, moyennant un simple ajustement de la pression de fluidisation Pf et de l'orifice de sortie (8) à tous les types de matières pulvérulentes énumérées dans l'introduction du présent document.

**Revendications**

1. Dispositif de distribution à débit régulé d'une matière pulvérulente fluidisable, comportant un moyen de stockage (1) et un moyen de fluidisation (4), (5) de ladite matière pulvérulente et un moyen d'évacuation de la matière pulvérulente fluidisée, dispositif comportant un caisson (2) en deux parties, une partie supérieure (2A) reliée d'une part à une de ses extrémités (7A) au moyen de stockage (1) par une colonne (3) et d'autre part à son extrémité opposée (7B) à une colonne d'équilibrage et de dégazage (6), et une partie inférieure (2B) séparée de la partie supérieure (2A) par une paroi poreuse de fluidisation (4), ladite partie inférieure (2B) étant reliée à une arrivée (5) de gaz de fluidisation à pression régulée, caractérisé en ce que la partie supérieure (2A) du caisson comporte sur la face verticale d'extrémité (7B) un orifice (8) de sortie de la matière pulvérulente fluidisée, situé immédiatement au-dessus du niveau de la paroi poreuse (4) de fluidisation et muni d'un ajutage de sortie (8A) dont le diamètre interne est supérieur à celui dudit orifice (8) de section telle qu'il existe une relation biunivoque entre le débit de matière pulvérulente fluidisée sortant par l'orifice et la pression de fluidisation.

2. Dispositif de distribution à débit régulé, selon revendication 1, caractérisé en ce que la distance L entre le rebord inférieur ou arête (3A) de la colonne (3) d'alimentation affleurant ou traversant la paroi supérieure (9) du caisson et la face verticale d'extrémité (7B) est suffisante, en l'absence de toute fluidisation, pour éviter l'obturation de l'orifice (8) par le pied du talus d'aboulement du matériau pulvérulent.

3. Dispositif de distribution à débit régulé, selon revendication 1 ou 2, caractérisé en ce que dans le but de fournir un débit supplémentaire d'appoint, il comporte un deuxième orifice de sortie (8B) situé au-dessus du niveau du premier orifice.

4. Dispositif de distribution à débit réglable selon revendication 3, caractérisé en ce que le deuxième orifice (8B) fournissant un débit d'appoint est situé, de préférence, au-dessus du niveau (13) atteint par la matière pulvérulente dans la colonne d'équilibrage (6) en régime de débit normal.

**Patentansprüche**

1. Vorrichtung zur Verteilung eines pulverförmigen fluidisierbaren Materials mit reguliertem Durchsatz, mit einem Mittel zum Speichern (1) und einem Mittel zum Fluidisieren (4), (5) des pulverförmigen Materials und einem Mittel zum Entleeren des fluidisierten pulverförmigen Materials, wobei die Vorrichtung einen Kasten (2) mit zwei Teilen, einem oberen Teil (2A), der einerseits an einem seiner Enden (7A) mit dem Mittel zum Speichern (1) durch eine Säule (3) und andererseits an seinem entgegengesetzten Ende (7B) mit einer Ausgleichs- und Entgasungssäule (6) verbunden ist, und einen unteren Teil (2B) aufweist, der vom oberen Teil (2A) durch eine poröse Fluidisierungswand (4) getrennt ist, wobei der untere Teil (2B) mit einer Zuleitung (5) von Fluidisierungsgas mit reguliertem Druck verbunden ist, dadurch gekennzeichnet, dass der obere Teil (2A) des Kastens an der vertikalen Fläche des Endes (7B) eine Öffnung (8) zum Auslass des fluidisierten pulverförmigen Materials aufweist, die unmittelbar oberhalb des Niveaus der porösen Fluidisierungswand (4) liegt und mit einem Auslassstutzen (8A) ausgerüstet ist, dessen Innendurchmesser grösser als der der Öffnung (8) von solchem Querschnitt ist, dass eine eindeutige Beziehung zwischen dem Durchsatz von durch die Öffnung austretendem fluidisiertem Material und dem Fluidisierungsdruck existiert.

2. Vorrichtung zur Verteilung mit reguliertem Durchsatz nach Anspruch 1, dadurch gekennzeichnet, dass der Abstand L zwischen dem unteren Rand oder der Kante (3A) der Speisungssäule (3) der bzw. die mit der oberen Wand (9) des Kastens fluchtet oder sie durchsetzt, und der vertikalen Fläche des Endes (7B) in der Abwesenheit jeder Fluidisierung ausreichend ist, um die Verstopfung der Öffnung (8) durch den Fuss der Schüttböschung des pulverförmigen Materials zu vermeiden.

3. Vorrichtung zur Verteilung mit reguliertem Durchsatz nach Anspruch 1 oder 2, dadurch gekennzeichnet, dass sie zwecks Lieferns eines ergänzenden Zusatzdurchsatzes eine zweite Auslassöffnung (8B) aufweist, die oberhalb des Niveaus der ersten Öffnung liegt.

4. Vorrichtung zur Verteilung mit reguliertem Durchsatz nach Anspruch 3, dadurch gekennzeichnet, dass die zweite, einen Zusatzdurchsatz liefernde Öffnung (8B) vorzugsweise oberhalb des Niveaus (13) liegt, das vom pulverförmigen Material in der Ausgleichssäule (6) im Bereich normalen Durchsatzes erreicht wird.

**Claims**

1. Apparatus for the distribution at a regulated rate of a fluidisable powdery material comprising a storage means (1) and a means (4, 5) for fluidisation of said powdery material and a means for discharge of the fluidised powdery material, the apparatus comprising a casing (2) in two parts, an upper part (2A) connected on the one hand at one of its ends (7A) to the storage means (1) by a column (3) and on the other hand at its opposite end (7B) to a balancing and degassing column (6), and a lower part (2B) which is separated from the upper part (2A) by a porous fluidisation wall (4), said lower part (2B) being connected to an intake (5) for fluidisation gas at a regulated pressure, characterised in that the upper part (2A) of the casing comprises on the vertical end face (7B) an outlet orifice (8) for the fluidised powdery material, which is disposed immediately above the level of the porous fluidisation wall (4) and which is provided with an outlet connection (8A) whose inside diameter is greater than that of said orifice (8) of a section such that there is a bi-univocal relation between the flow rate of fluidised powdery material issuing by way of the orifice and the fluidisation pressure.

2. A regulated rate distribution apparatus according to claim 1 characterised in that the distance L between the lower edge or border (3A) of the feed column (3) which is level with or passes through the upper wall (9) of the casing and the vertical end face (7B) is sufficient, in the absence of any fluidisation, to prevent the orifice (8) from being closed off by the bottom of the slippage embankment portion of powdery material.

3. A regulated rate distribution apparatus according to claim 1 or claim 2 characterised in that, in order to provide an additional make-up flow, it comprises a second outlet orifice (8B) disposed above the level of the first orifice.

4. A regulated rate distribution apparatus according to claim 3 characterised in that the second orifice (8B) for supplying a make-up flow is preferably disposed above the level (13) reached by the powdery material in the balancing column (6) under normal flow rate conditions.

**1·2**

**FIG.1**

**FIG.1A**

**FIG.2**

## 2·2

FIG.3

FIG.4